# EUROPÄISCHE PATENTSCHRIFT

(11) **EP 3 625 140 B1**
(45) Veröffentlichungstag und Bekanntmachung des Hinweises auf die Patenterteilung: **11.02.2026**
(21) Anmeldenummer: 19734044.1
(22) Anmeldetag: 25.06.2019
(51) Int. Cl.: B65D 65/40, B65D 65/46, B65D 85/804, B32B 23/06, B32B 23/10

(54) **MEHRSCHICHTIGE FOLIE, INSBESONDERE SIEGELFOLIE**
MULTILAYER FILM, IN PARTICULAR SEALING FILM
FEUILLE MULTICOUCHE, EN PARTICULIER FEUILLE DE SCELLEMENT

(30) Priorität: 25.06.2018 DE 102018115236
(43) Veröffentlichungstag der Anmeldung: 25.03.2020
(73) Patentinhaber: SPC Sunflower Plastic Compound GmbH, 49681 Garrel (DE)
(72) Erfinder: MEYER, Sebastian, 58675 Hemer (DE)
(74) Vertreter: Eisenführ Speiser
(86) Internationale Anmeldenummer: PCT/EP2019/066785
(87) Internationale Veröffentlichungsnummer: WO 2020/002304

(56) Entgegenhaltungen:
- EP-A1- 3 398 766
- WO-A1-2017/063680
- WO-A1-2017/186743
- WO-A2-2015/177591
- DE-A1- 1 917 365
- US-A- 2 570 478

## Beschreibung

Es gibt Kunststofffolien vieler Art und diese Folien dienen häufig der Verpackung oder haben eine ganz bestimmte Funktion. Hierbei ist insbesondere Funktion einer Siegelfolie zu nennen, welche bei Lebensmittelverpackungen verwendet wird, z.B. als Abdeckung für Getränkekapseln, z.B. für Kaffee, Tee, Funktionsgetränken aller Art, bei dem einerseits Folie das gefüllte Innere der Kapsel, also Kaffee, Tee, Kräuter, etc. luftdicht versiegelt, andererseits aber auch möglich, dass die Kapsel mittels Nadeln durch die jeweilige Maschine durchstochen werden kann um dann durch die Hohlnadeln Flüssigkeit z.B. heißes Wasser unter einem vorbestimmten Druck in die Kapsel zu pressen. Schließlich ist es auch möglich, dass der Bruch der Folie statt durch mechanische Einwirkung nach Außen durch den Wasserdruck verursacht wird, der die Folie gegen eine stumpfe Pyramidenplatte drückt und so verformt, dass die Reißdehnung überschritten wird und es zum Bruch der Folie kommt.

Bei solchen Verwendungen weist das Kapselmaterial eine Kapselwand auf, einen Kapselboden und auf der gegenüberliegenden Seite des Kapselbodens eine Öffnung mit einem regelmäßig umlaufenden flangartigen Rand.

Auf dieser Kapselöffnung wird dann die Siegelfolie appliziert, nachdem die Kapsel mit dem gewünschten Getränkepulver, also z.B. Kaffee, Tee oder dergleichen befüllt wurde.

Wenn in einer Kaffeemaschine entsprechende Einfüllstutzen durch den Kapselboden dringen, um somit Wasser einer vorbestimmten Temperatur und mit einem vorbestimmten Druck in die Kapsel zu pressen, werden durch Schneidelemente oder Nadeln, etc. die Siegelfolie durchstochen, geschnitten, etc., sodass die Flüssigkeit also z.B. Kaffee, Tee, funktionaler Drink, etc. aus der Kapsel entweichen können.

Es gibt bereits eine Vielzahl von Vorschlägen zur Ausbildung der Siegelfolie.

Eine besondere Herausforderung besteht aber dann, wenn die Siegelfolie nicht nur ihre Funktion als Siegelfolie erfüllen soll, sondern, wenn die gesamte Kapsel einschließlich der Siegelfolie auch homekompostierbar, also in relativ kurzer Zeit biodegradierbar sein soll.

Wenn beispielsweise die Siegelfolie aus konventionellen Standardkunststoff, wie z.B. Polypropylen (PP), Polyethylen (PE), Polyvinylchlorid (PVC), etc. besteht, ist eine solche Homekompostierbarkeit der Folie und damit auch der gesamten Kapsel nicht gegeben.

Wenn der Kapselkörper aus einem homekompostierbaren Kunststoff besteht, wie z.B. S²PC-PBS und die Siegelfolie aus einem konventionellen Kunststoff besteht, wäre es zwar möglich, vor der Kompostierung die Siegelfolie vom Kapselkörper zu trennen, dies ist jedoch außerordentlich aufwendig, technisch kaum darstellbar und letztlich auch aus Kostengründen nicht wirtschaftlich.

Soweit in der vorliegenden Anmeldung von einem homekompostierbaren Kunststoff vom Typ S²PC-PBS oder S²PC-PBSA oder S²PC-PBS/PBSA die Rede ist, ist damit das Material gemeint, welches auch in der Patentanmeldung WO 2017/186743 beschrieben und offenbart ist. S²PC-PBS bzw. S²PC-PBSA oder S²PC-PBS/PBSA sind ein Biokomposit, bei welchem das biologische Bestandteil (S²PC) Schalenmaterial ein gemahlenes Schalenmaterial der Schale des Sonneblumenkerns ist und PBS ein Polybutylensuccinat (eine chemische Verbindung aus der Gruppe der linearen aliphatischen Polyester) und PBSA ein Polyethylensuccinat-Adipat. PBS bzw. PBSA als solche sind als biologisch abbaubare Werkstoffe bekannt.

Als Stand der Technik wird ferner hingewiesen auf DE 102013216309, DE 102013208876 und WO 2013/072146.

Das Dokument WO 2017/063680 A1 betrifft eine Kapsel und einen Apparat zu Zubereitung von Getränken und ein Verfahren zur Herstellung von Kapseln.

In der Schrift WO 2015/177591 A1 werden eine Kapsel und eine Einrichtung zur Zubereitung von Getränken beschrieben, und ein Verfahren um sie zu produzieren.

Es ist auch bekannt, Kapsel wie auch die deckende Folie, nicht aus Kunststoff, sondern aus Metall, z.B. Aluminium zu fertigen. Auch die Ausbildung von dünnen Aluminiumfolien ist bekannt aber eine solche Materialität der Kapsel, insbesondere auch der Folie, erfüllt nicht die Ansprüche an die Homekompostierbarkeit.

Schließlich ist es auch bekannt, dass als Siegelfolie, soweit sie mit "bio" oder "kompostierbar" beworben werden, verschiedenartige Papiere zum Einsatz kommen. Der Nachteil dieser Papiere ist, dass sie keine gute Barrierewirkung gegen Sauerstoff haben und damit der Kaffee innerhalb der Kapsel schnell Qualität einbüßt, letztlich also durch Oxidation degradiert, was sich sehr unangenehm im Geschmack niederschlägt.

Bei der vorliegenden Erfindung geht es also vornehmlich darum, eine Siegelfolie, insbesondere eine Siegelfolie für Getränkekapseln bereitzustellen, welche eine sehr gute Sauerstoffbarrierewirkung aufweist, welche homekompostierbar ist und auch ein gewünschtes Bruchverhalten aufweist, damit die bekannten Mittel in der Kaffeemaschine die Siegelfolie gut öffnen können.

Die erfindungsgemäße Aufgabe wird durch eine mehrschichtige Folie gemäß den beigefügten Ansprüchen gelöst.

Erfindungsgemäß besteht die mehrschichtige Folie aus zwei Lagen Filterpapier (im Prinzip sind dies Papiere, die auch für Teefilter zum Einsatz kommen) und einer Lage (Schicht) aus Kunststofffolie. Die Schicht aus Filterpapier und die Kunststofffolie werden durch einen Kaschierprozess miteinander verbunden, z. B. laminiert.

Der Vorteil der Papierlage besteht darin, dass sie naturgemäß porös ist, der Vorteil der Kunststofffolie besteht darin, dass sie gasundurchlässig ist.

Die vorgenannten Folienlagen des Mehrschichtverbundes können dabei sämtlich so ausgestaltet werden, dass die Folie eine Gesamtdicke aufweist, die vorzugsweise unter 0,2 mm liegt.

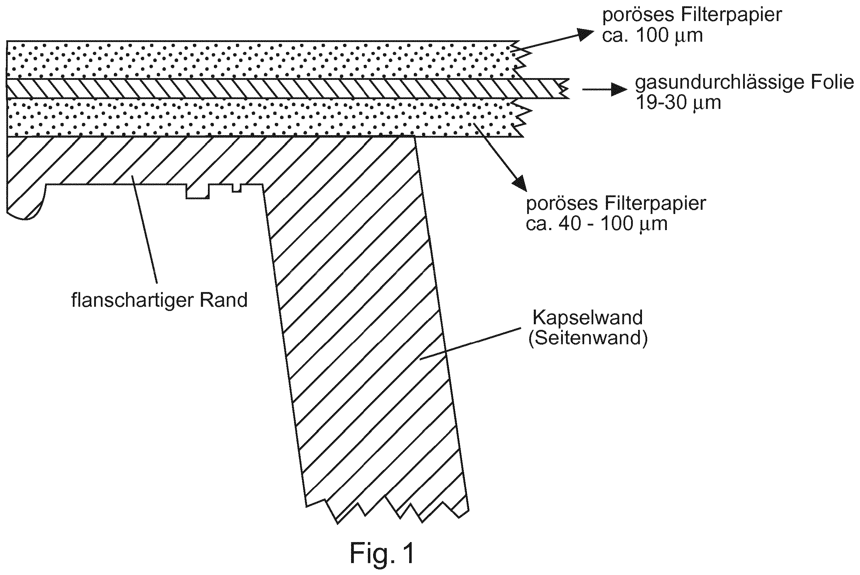

Ein in der Zeichnung dargestelltes Beispiel für diese Folie ist in Figur 1 dargestellt.

Dabei ist gut zu erkennen, dass die Siegelfolie aus einer ersten, zweiten und dritten Schicht besteht, nämlich einer ersten Schicht aus porösem Filterpapier mit einer Dicke von circa 40 - 100 µm.

Daran an schließt sich eine gasundurchlässige Folie, welche eine Dicke aufweist, die im Bereich zwischen 10 µm und 30 µm liegt, vorzugsweise im Bereich von 13 - 25 µm , besonders bevorzugt 14 - 19 µm.

Daran wiederum schließt sich an ein poröses Filterpapier mit einer Dicke von ca. 30 bis 100 µm an

Diese Folie aus den beschriebenen drei Schichten ist auf den flangartigen Rand der Kapselwand aufgeklebt, auflaminiert, verschweißt, etc. Die Kapselwand bildet dabei die Seitenwand der Kapsel.

Ein besonders dünnes bzw. besonders poröses Filterpapier begünstigt die Versiegelung ohne zusätzliche Kunststofffasern im Papier.

Besonders dünn ist ein Papier mit einem Flächengewicht von unter 12 g/m² und einer Dicke von ca. 40 µm. Unter besonders porös werden Papiere mit einer Luftdurchlässigkeit von über 1500 l/m²*s verstanden.

Die Erfindung zielt damit auch darauf ab, mit der Siegelfolie und dem entsprechenden Getränkekapselmaterial nicht nur eine homekompostierbare Lösung zur Verfügung zu stellen, sondern auch eine Lösung, bei dem nur durch die Kapsel und ihrer Abdeckung durch die Folie selbst, eine ausreichenden Sauerstoffbarriere bereitgestellt wird.

Bei einer bekannten Lösung, bei welcher beispielsweise die Siegelfolie nur aus Papier besteht, muss zur Ausbildung einer hinreichenden Sauerstoffbarriere die gesamte befüllte Getränkekapsel in einer zusätzlichen Barriereverpackung untergebracht werden, wobei diese Barriereverpackung üblicherweise aus PE, Aluminium oder PE-EVOH-PE oder dergleichen besteht, bzw. dieses enthält. Vor dem Gebrauch der Getränkekapsel wird dann die Kapsel aus der Barriereverpackung entnommen, was aber wiederum zusätzlichen Müll in Form der Barriereverpackung erzeugt und diese Barriereverpackung ist eben nicht homekompostierbar, sondern muss auf den üblichen Kunststoff- oder Müllentsorgungsweg gehen.

Um zu viel Müll dieser Art zu vermeiden, werden daher auch häufig eine Vielzahl von Kapseln, z.B. 10 Stück in einer gemeinsamen Umverpackung verpackt. Reißt man allerdings diese Verpackung auf, um die erste Kapsel zu entnehmen, beginnt bereits für die anderen Produkte die Haltbarkeit zu sinken, weil die Luft, die in die Umverpackung dringt, auch das Innere der Getränkekapselbefüllung degradiert und altert.

Wenn man eine reine Papierfolie als Siegelfolie bereitstellen würde, wäre der Inhalt der Kapsel, also z.B. Kaffee eines Tages verdorben bzw. geschmacklich so degradiert, dass er kein attraktives Produkt mehr darstellt.

Es wäre auch möglich, wenn man nur eine Kunststofffolie als Deckel für die Getränkekapsel verwendet. Diese sind jedoch, wie erwähnt, in der Regel zu flexibel, als dass sie im geforderten Moment reißen würden. Selbst spröde Folien, die im richtigen Moment reißen, verstopfen anschließend, bedingt durch das heiße Wasser unter Druck und die damit einhergehende Erweichung des Folienmaterials, die Löcher des Auslasssiebes des Extraktionsautomaten.

Es ist auch möglich, statt Celluloseacetat ein Celluloseregenerat einzusetzen, oder eine Mischung aus einem Celluloseacetat und einem Celluloseregenerat. Als Celluloseregenerat können alle bekannten Celluloseregenerat-Werkstoffe/Materialien eingesetzt werden, bevorzugt ist Viskose (Zellwolle) und/oder Cellulosehydrat (Cellophan).

In dem in der Figur dargestellten Beispiel besteht die gasundurchlässige Folie bevorzugt aus einem Celluloseacetat bzw. enthält dieses. Eine Celluloseacetatfolie mit einer Dicke von 10 bis 50 µm gewährleistet eine hervorragende Sauerstoffbarriere von bis zu 1 cm³/m² x 24 Stunden und eine Wasserdampfbarriere von bis zu 20 g/m² x 24 Stunden. Dies wird gewährleistet, indem man den Celluloseacetatfilm mit Polyvinylidenchlorid (PVDC) beschichtet. Wird diese beschichtete Folie als Siegelfolie für Lebensmittelbehälter eingesetzt, führt dies jedoch bei der Verwendung auf einer Nespresso-kompatiblen Getränkekapsel zum Verstopfen der Maschine während des Brühvorgangs. Um dies zu verhindern, sollte der Druck, der während des Brühens auf die Folie wirkt, reduziert werden. Dies darf aber nicht dazu führen, dass der Druck so stark sinkt, dass kein zufriedenstellendes Brühergebnis mehr erzielt wird. Denn es muss stets ausreichend Wasserdruck in der Siegelfolie vorhanden sein, um ein durch diesen Druck verursachtes Reißen der Folie und damit Freigeben des Getränks gewährleisten. Die erfindungsgemäße Aufgabe lässt sich z. B. auch mit einem Papier (Filterpapier) lösen, bei welchem die Porösität über 1.600 l/m²s für die untere Papierlage aufweist.

Als Druckminderer für diesen Zweck wurde herausgefunden, dass sich zellulosereiche Papiere bei einer Grammatur von 10 bis 30 g/m² geeignet sind. Die Porosität dieser Papiere variiert zwischen etwa 80 und 1.600 l/m²s nach EN ISO 9237.

Der bis hierhin als mehrschichtig, z.B. auch zweischichtig beschriebene Aufbau der Siegelfolie hat u.U. den Nachteil, dass beim Reißen des Papiers und der Folie kein Getränkepulver, z.B. Kaffeepulver, austreten, und mit in die Tasse gelangen darf. Um dies zu verhindern, wurde eine dritte Schicht eingeführt, die ebenfalls aus den zuvor schon beschriebenen Papieren besteht und die sich auf der noch freien Seite der Folien aufbringen lässt. Damit kann das Problem austretenden Kaffees aus der Kapsel während des Brühvorgangs und einer damit einhergehenden Verstopfung der Kapselautomaten verhindert werden.

Um die 3-Schicht-Folie in eine Kapselabfüllanlage einführen zu können, müssen die Folienschichten miteinander permanent verbunden werden. Dazu werden die drei einzelnen Komponenten-Folien, also Papier-Celluloseacetatfilm-Papier auf einer Kaschieranlage über diverse Walzen zusammengeführt und bei 120 bis 200° Celsius miteinander verbunden, z.B. verklebt.

Als Kleber dient dabei das bereits schon auf dem Celluloseacetatfilm befindliche PVdC (Polyvinyldenchlorid) die so miteinander kaschierte fertige Siegelfolie lässt sich dann auf beliebige Breiten schneiden und verschicken und auf die gefüllte Kapsel applizieren.

Wie beschrieben, hat die Folie die Aufgabe, eine Kaffeekapsel oder dergleichen zu verschließen und zwar sauerstoffdicht und feuchtigkeitsdicht zu verschließen, damit das darin enthaltene Lebensmittel also Getränkepulver, Kaffeepulver, etc. lange frisch zu halten. Dies ist insbesondere bei Kaffee eine besondere Herausforderung, da Kaffee bereits auf kleine Mengen Sauerstoff mit geschmacklichen Veränderungen/Degradierungen reagiert. Da die Lagerdauer in der Kapsel ein Jahr oder länger betragen kann, ist bei der Herstellung der Kapsel das Verbrauchsdatum nicht bestimmbar. Die Kapsel und die Folie muss also über einen sehr langen Zeitraum den Sauerstoff aus dem Kapselinneren und damit dem dort vorhandenen Getränkepulver, Kaffee, etc. fernhalten, was am besten mit einer möglichst geringen Sauerstofftransmissionsrate der Folie und natürlich der Kapsel der Fall ist.

Darüber hinaus soll die Folie ein optimales Brühergebnis für verschiedene Lebensmittel gewährleisten. So ist z.B. für einen Kaffee Lungo (110ml Kaffee) z.B. erforderlich, dass das Zusammenspiel aus Kaffee, Kapsel und Folie zu einer Brühdauer von circa 40 Sekunden führt. Ist der Wert deutlich darunter ist der Kaffee deutlich unterextrahiert und schmeckt dünn (wässrig) und zeigt eine nur schwach ausgeprägte Crema mit wenig Farbe und Volumen. Liegt der Wert deutlich darüber, wird der Kaffee überextrahiert und schmeckt unangenehm kräftig (Robusta-ähnlich) und die Crema wird sehr dunkel. Da es aber sehr verschiedene Geschmäcker, Kaffeesorten und Zubereitungsarten gibt, kann man dem Anspruch nach einem optimalen Kaffee nicht mit einer einzigen Folie gerecht werden, daher ist Aufgabe dieser Erfindung, ein Portfolio an Mehrschichtfolien aufzuzeigen, die je nach Kaffee (Sorte, Röstgrad, Mahlgrad, Produktionszeit der Maschine, etc.) ein zufriedenstellendes Ergebnis liefert.

Gleichzeitig soll erfindungsgemäß die Folie kompostierbar sein, was wie beschrieben mit Celluloseacetat und Papier gegeben ist.

Wie ausgeführt, werden die beiden Schichten aus Filterpapier und die wasserundurchlässige Folie durch einen Kaschierprozess miteinander verbunden.

Zur Verbesserung der Siegelfähigkeit dieser Anordnung kann im Kaschierprozess auch Kunststoffpulver zwischen die Papierlage und Folie gestreut werden, sodass dieses Kunststoffpulver nach dem Kaschierprozess zwischen der Papierlage und der Kunststofffolie liegt. Das dabei eingesetzte Kunststoffpulver besteht vorzugsweise aus kompostierbarem, besonders bevorzugt homekompostierbarem Material, wie z. B. S²PC, PBS, PBSA, PBS/PBSA, PLA, PHA oder dergleichen.

Das Pulver weist hierbei bevorzugt eine Korngröße im Bereich von 50 bis 500 µm auf, besonders bevorzugt 200 bis 400 µm.

Soweit in der vorliegenden Anmeldung die Eigenschaft der Homekompostierbarkeit angesprochen wird, wird darunter verstanden, die Erfüllung der entsprechenden Normen hierzu, nämlich: EN13432. Die Homekompostierbarkeit unterscheidet sich von der industriellen Kompostierbarkeit.

Letztere setzt voraus, dass zur Kompostierung das zu kompostierende Material in einer Fabrik, in einem Behälter einer künstlichen Atmosphäre ausgesetzt wird und somit eine Kompostierbarkeit zu bewerkstelligen. Unter der Homekompostierbarkeit hingegen wird das Kompostieren, wie es auf einem Komposthaufen, z. B. im Garten abläuft, verstanden.

## Patentansprüche

1. Mehrschichtige Folie, geeignet als Siegelfolie für Kaffeekapseln, **dadurch gekennzeichnet, dass** die Folie aus einer ersten Schicht, einer zweiten und einer dritten Schicht besteht,
wobei
- die erste Schicht aus porösem Filterpapier einer Dicke von circa 40 bis 100 µm besteht,
- die zweite Schicht aus einer gasundurchlässigen Folie besteht, welche eine Dicke aufweist, die im Bereich zwischen 10 und 30 µm liegt, wobei sich die zweite Schicht an die erste Schicht anschließt, und wobei die gasundurchlässige Folie aus Celluloseacetat und/ oder Celluloseregenerat besteht und eine Schicht bildet, welche einseitig oder beidseitig mit Polyvinylidenchlorid beschichtet ist,
und
- die dritte Schicht aus porösem Filterpapier einer Dicke von circa 30 bis 100 µm besteht, wobei sich die dritte Schicht an die zweite Schicht anschließt.

2. Folie nach Anspruch 1, **dadurch gekennzeichnet, dass** die Folie eine Gesamtdicke aufweist, die unter 0,2 mm liegt.

3. Verwendung einer Folie nach einem der Ansprüche 1 bis 2 als Siegelfolie für eine Kaffeekapsel.

## Claims

1. Multilayer film suitable as sealing film for coffee capsules, **characterized in that** the film consists of a first layer, a second layer and a third layer, wherein
- the first layer consists of porous filter paper having a thickness of about 40 - 100 µm,
- the second layer consists of a gas-impermeable film having a thickness in the range between 10 µm and 30 µm, wherein the second layer is adjacent to the first layer and wherein the gas-impermeable film consists of cellulose acetate and/or regenerated cellulose and forms a layer which is coated on one side or on both sides with polyvinylidene chloride,
- the third layer consists of a porous filter paper having a thickness of about 30 to 100 µm, wherein the third layer adjoins the first layer.

2. Film according claim 1, **characterized in that** the film has a total thickness of below 0.2 mm.

3. Use of a film according to one of claims 1 to 2 as a sealing film for a coffee capsule.

## Revendications

1. Film multicouche, adapté comme film de scellement pour capsules de café, **caractérisé en ce que** le film est constitué d'une première couche, d'une deuxième couche et d'une troisième couche,
dans lequel
- la première couche est constituée de papier-filtre poreux d'une épaisseur d'environ 40 à 100 µm,
- la deuxième couche est constituée d'un film imperméable aux gaz, qui présente une épaisseur comprise dans la plage de 10 à 30 µm, dans lequel la deuxième couche se situe sur la première couche, et dans lequel le film imperméable aux gaz est constitué d'acétate de cellulose et/ou de régénéré de cellulose et forme une couche, qui est revêtue d'un côté ou des deux côtés de chlorure de polyvinylidène,
et
- la troisième couche est constituée de papier-filtre poreux d'une épaisseur d'environ 30 à 100 µm, dans lequel la troisième couche se situe sur la deuxième couche.

2. Film selon la revendication 1, **caractérisé en ce que** le film présente une épaisseur totale qui est inférieure à 0,2 mm.

3. Utilisation d'un film selon l'une quelconque des revendications 1 et 2 comme film de scellage pour une capsule de café.
